# EUROPÄISCHE PATENTSCHRIFT

(11) **EP 0 525 334 B1**
(45) Veröffentlichungstag und Bekanntmachung des Hinweises auf die Patenterteilung: **24.08.1994**
(21) Anmeldenummer: 92109347.2
(22) Anmeldetag: 03.06.1992
(51) Int. Cl.: E06B 9/08, E06B 9/42, B60J 1/20, B60J 3/02

(54) **Fensterrollo**
Window roller blind
Store à rouleau de fenêtre

(30) Priorität: 29.06.1991 DE 4121623
(43) Veröffentlichungstag der Anmeldung: 03.02.1993
(73) Patentinhaber: Gebr. Happich GmbH, D-42097 Wuppertal (DE)
(72) Erfinder: Kauka, Christof, W-4178 Kevelaer 1 (DE)

(56) Entgegenhaltungen:
- EP-A- 0 221 573
- DE-A- 2 815 821
- DE-U- 7 902 405
- FR-A- 785 099
- FR-A- 2 429 317

## Beschreibung

Die Erfindung bezieht sich auf ein Fensterrollo, insbesondere für Kraftfahrzeuge, mit einer, eine in Aufrollrichtung vorgespannte Federeinrichtuug aufweisenden Wickelwelle, an der die Rollobahn mit einer Kante befestigt ist, deren andere Kante an einer Zugleiste befestigt ist, wobei zwischen der Wickelwelle und der Zugleiste ein Führungsmechanismus zum Aus- und Einfahren der Rollobahn angeordnet ist, welcher aus zwei kniegelenkartigen Lenkerarmpaaren besteht, wobei die freien Lenkerarme der Lenkerarmpaare einerseits an ortsfesten Teilen des Fahrzeugs oder an die Wickelwelle aufnehmenden Lagerböcken und andererseits an der Zugleiste schwenkbeweglich befestigt sind.

Das Dokument DE-U-79 02 405 zeigt ein Fensterrollo, bei dem zum Ein- und Ausfahren der Rollobahn teleskopierbare Schwenkstreben vorgesehen sind. Dagegen zeigt das Dokument FR-A- 7 850 099 ein Fensterrollo für Fahrzeuge der gattungsgemäßen Art. Dieses bekannte Fensterrollo ist mit einer in Aufrollrichtung vorgespannte Federeinrichtung aufweisenden Wickelwelle ausgerüstet, an der die Rollobahn mit einer Kante befestigt ist, deren andere Kante an einer Zugleiste befestigt ist. Zwischen der Wickelwelle und der Zugleiste ist ein in der Ebene der ausgezogenen Rollobahn wirkender Führungsmechanismus angeordnet, der aus zwei kniegelenkartigen Lenkerarmpaaren besteht, wobei die freien Lenkerarme der Lenkerarmpaare einerseits an ortsfesten Teilen des Fahrzeugs und andererseits an der Zugleiste schwenkbeweglich befestigt sind. Um zu gewährleisten, daß das Aus- und Einfahren der Rollobahn rechtwinklig zur Wickelwelle erfolgt, sind die an ortsfesten Teilen des Fahrzeugs befestigten Lenkerarme über eine Verzahnung miteinander gekuppelt, was aufwendig und störanfällig erscheint.

Der vorliegenden Erfindung liegt die Aufgabe zugrunde, ein Fensterrollo zur Verfügung zu stellen, welches zum Einbau mit einem geringen Platzbedarf auskommt und bei dem die Ausfahrrichtung der Rollobahn rechtwinklig zur Wickelwelle erfolgt, wobei auch bei außermittiger Krafteinleitung ein paralleles Ein- und Ausfahren gewährleistet sein soll.

Diese Aufgabe wird erfindungsgemäß dadurch gelöst, daß eine die Kniegelenke der Lenkerarmpaare miteinander verbindende, sich parallel zur Wickelwelle und Zugleiste erstreckende Strebe und im Bereich der Kniegelenke Führungsmittel vorgesehen sind, um eine Parallelverschiebung der Zugleiste senkrecht zur Wickelwelle beim Aus- und Einfahren der Rollobahn sicherzustellen.

Das erfindungsgemäße Fensterrollo zeichnet sich durch eine einfach und kostengünstig herzustellende Kompaktbauweise sowie durch eine einfache und funktionssichere Bedienbarkeit aus.

Gemäß einer bevorzugten Weiterbildung der Erfindung ist vorgesehen, daß die Endbereiche der Strebe jeweils ein erstes, sich in Strebenlängsrichtung erstreckendes Langloch und zwei hierzu senkrecht ausgerichtete weitere Langlöcher aufweist, von denen das eine oberhalb und das andere unterhalb des ersten Langlochs angeordnet ist, wobei das erste Langloch von einem die Lenkerarme und die Strebe kniegelenkartig miteinander verbindenden Gelenkzapfen durchsetzt ist und in die beiden anderen Langlöcher Stifte eingreifen, von denen der eine am unteren und der andere am oberen Lenkerarm sitzt. Durch diese Maßnahmen ist sichergestellt, daß sich die Lenkerarme der Lenkerarmpaare beim Aus- und Einfahren der Rollobahn gleichlaufend bewegen und daß die Zugleiste nur senkrecht zur Wickelwelle, nicht hingegen in axialer Richtung verfahrbar ist. Die bei der Betätigung des Fensterrollos angestrebte Parallelfunktion ist damit gewährleistet.

In Ausgestaltung der Erfindung kann weiterhin vorgesehen sein, daß im Bereich von sich gegeneinander bewegenden Teilen des Führungsmechanismusses, wie der Kniegelenke, eine ggf. einstellbar oder nachstellbar ausgebildete Bremseinrichtung angeordnet ist. Für die Bremseinrichtung, die dazu dient, ein ungewolltes sich Aufdrehen der Rollobahn zu verhindern, kann im praktischen Gebrauch des Fensterrollos eine einfache Reibungsbremse, z.B. in Form einer zwischen zwei Gelenkteilen anzuordnende Filzscheibe vorgesehen sein.

Eine weitere Ausgestaltung der Erfindung ist gekennzeichnet durch eine vom Dachverkleidungssystem eines Fahrzeuges im wesentlichen verdeckte Anordnung des Fensterrollos oberhalb einer Seitenscheibe im Fahrzeug. Gerade im Fahrzeugseitenbereich eines Fahrzeugs bietet sich die Anordnung des neuen Fensterrollos an, weil wegen der hier im allgemeinen engen Platzverhältnisse, eine klappbare Sonnenblende unvorteilhaft wäre.

Schließlich kann noch vorgesehen sein, daß die Zugleiste mit einer grifffreundlichen Profilierung ausgebildet ist, wodurch sich die Anordnung einer separaten Handhabe erübrigt.

Ein Ausführungsbeispiel der Erfindung wird im folgenden anhand der Zeichnung näher erläutert. Es zeigen:
- Fig. 1: das Fensterrollo mit eingefahrener und
- Fig. 2: das Fensterrollo mit ausgefahrener Rollobahn,
- Fig. 3: eine Einzelheit des Fensterrollos in auseinandergezogener Darstellungsmanier und
- Fig. 4: die Einzelheit nach Fig. 3 im zusammengebauten Zustand.

Das neue Fensterrollo besteht aus einer Wickelwelle 1 einer Rollobahn 2, einer Zugleiste 3 und einem Führungsmechanismus noch näher zu beschreibender Art. Die Wickelwelle 1 weist eine, in Aufrollrichtung vorgespannte Federeinrichtung herkömmlicher und daher nicht näher dargestellter Art sowie in Lagerböcken 4 aufgenommene Achszapfen 5 auf. Die Wickelwelle 1 kann auch in einem Gehäuse untergebracht sein, das die Lagerböcke 4 oder damit vergleichbare Lagerstellen für die Achszapfen aufweist.

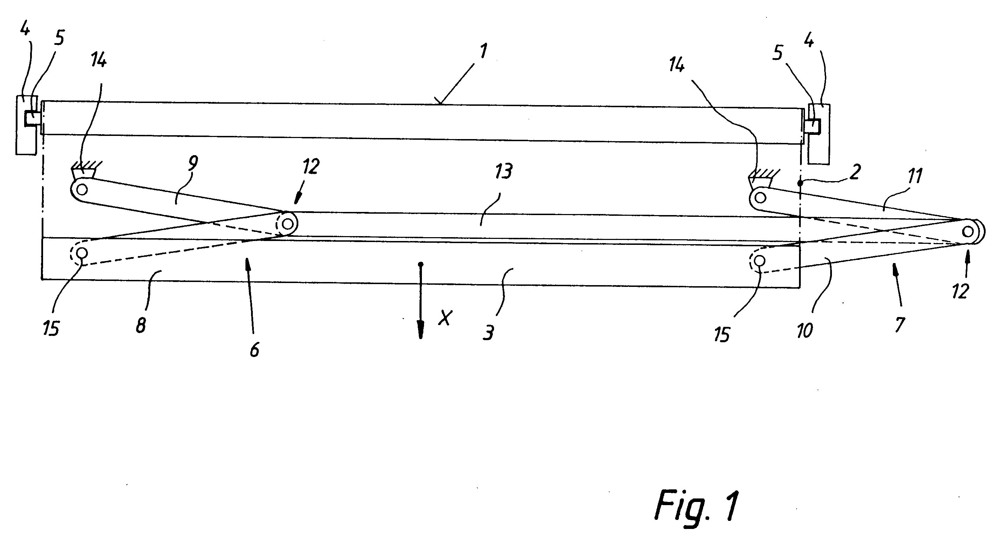

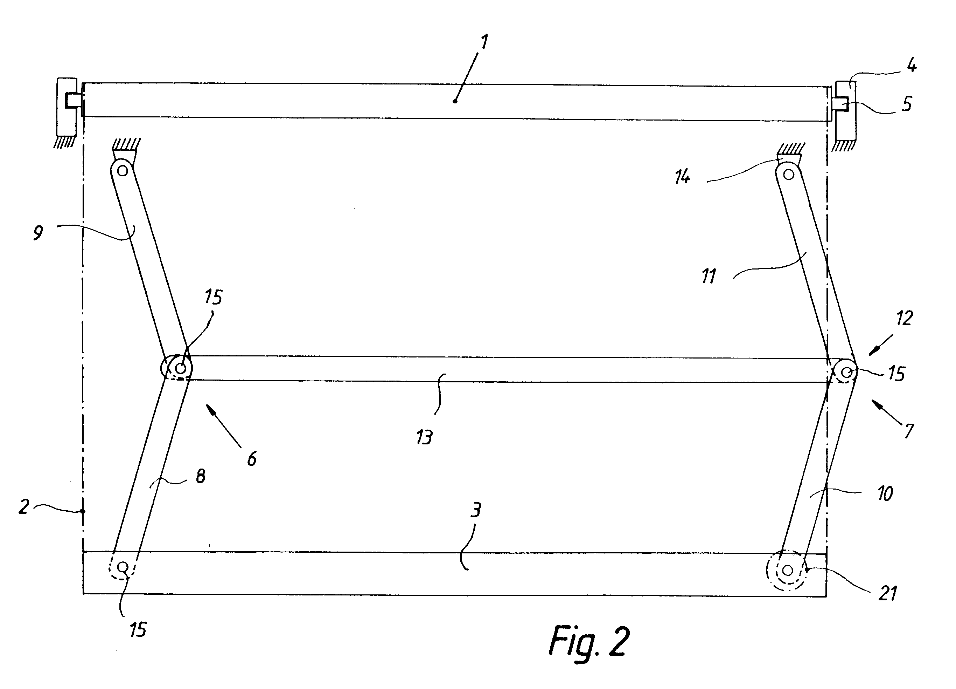

Die Rollobahn 2 ist mit einer Kante an der Wickelwelle 1 und mit der anderen Kante an der Zugleiste 3 befestigt. Durch eine senkrechte Bewegung der Zugleiste 3 in Pfeilrichtung X kann die Rollobahn 2 aus einer Nichtgebrauchslage nach Fig. 1 in eine Gebrauchslage nach Fig. 2 überführt werden.

Zum Überführen der Rollobahn von der einen in die andere Lage ist der erwähnte Führungsmechanismus vorgesehen. Dieser besteht aus zwei kniegelenkartigen Lenkerarmpaaren 6 und 7 mit den Lenkerarmen 8 und 9 bzw. 10 und 11 und einer die Kniegelenke 12 der Lenkerarmpaare 6, 7 miteinander verbindenden, sich parallel zur Wickelwelle 1 und Zugleiste 3 erstreckenden Strebe 13. Die freien Enden der Lenkerarme 9 und 11 sind an ortsfesten Teilen 14 des Fahrzeugs oder an die, die Wickelwelle 1 aufnehmenden Lagerböcke 4 angelenkt, während die freien Enden der Lenkerarme 8 und 10 an der Zugleiste 3 schwenkbeweglich befestigt sind. Zur Anlenkung ist jeweils ein Gelenkstift 15 (Schraube, Niet od. dgl.) vorgesehen, was auch für die Bildung der Kniegelenke gilt.

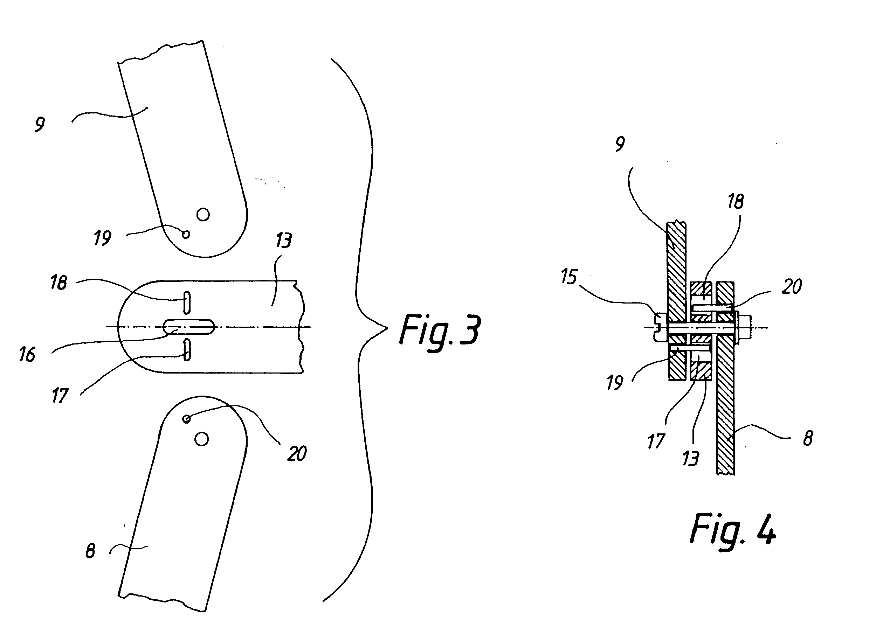

Wie insbesondere die Fig. 3 und 4 zeigen, weisen die beiden Endbereiche der Strebe 13 jeweils ein erstes, sich in Strebenlängsrichtung erstreckendes Langloch 16 und zwei hierzu senkrecht ausgerichtete weitere Langlöcher, nämlich ein unteres 17 und ein oberes Langloch 18 auf. Das erste Langloch 16 ist von einem die Lenkerarme 8 und 9 bzw. 10 und 11 und die Strebe 13 kniegelenkartig miteinander verbindenden Gelenkzapfen 15 durchsetzt, während in die beiden anderen Langlöcher 17, 18 Stifte 19 und 20 eingreifen, von denen der Stift 20 am unteren Lenkerarm 8 bzw. 10 und der andere 19 am oberen Lenkerarm 9 bzw. 11 sitzt. Hierdurch ergibt sich eine Zwangsführung für die Lenkerarmpaare 6 und für die Zugleiste 3, welch letztere nur senkrecht in bezug auf die Wickelwelle 1 bewegt werden kann. Die Kniegelenke 12 laufen bei der Rollobetätigung auf einer bogenförmigen Bahn, was einen Längenausgleich erforderlich macht, der durch die Langlöcher 16 sowie 17 und 18 realisiert wird.

In Fig. 2 ist an einer Lagerstelle mit strichpunktierten Linien eine Scheibe 21 aus reibungserhöhendem Material angedeutet, die als Bremseinrichtung dienen und einem ungewollten Aufwickeln der Rollobahn 2 entgegenwirken soll.

## Patentansprüche

1. Fensterrollo, insbesondere für Kraftfahrzeuge, mit einer, eine in Aufrollrichtung vorgespannte Federeinrichtung aufweisenden Wickelwelle (1), an der die Rollobahn (2) mit einer Kante befestigt ist, deren andere Kante an einer Zugleiste (3) befestigt ist, wobei zwischen der Wickelwelle (1) und der Zugleiste (3) ein Führungsmechanismus zum Aus- und Einfahren der Rollobahn (2) angeordnet ist, welcher aus zwei kniegelenkartigen Lenkerarmpaaren (6, 7) besteht, wobei die freien Lenkerarme der Lenkerarmpaare (6, 7) einerseits an ortsfesten Teilen (14) des Fahrzeugs oder an die Wickelwelle (1) aufnehmenden Lagerböcken (4) und andererseits an der Zugleiste (3) schwenkbeweglich befestigt sind, dadurch gekennzeichnet, daß eine die Kniegelenke (12) der Lenkerarmpaare (6, 7) miteinander verbindende, sich parallel zur Wickelwelle (1) und Zugleiste (3) erstreckende Strebe (13) und im Bereich der Kniegelenke (12) Führungsmittel vorgesehen sind, um eine Parallelverschiebung der Zugleiste (3) senkrecht zur Wickelwelle (1) beim Aus- und Einfahren der Rollobahn (2) sicherzustellen.

2. Fensterrollo nach Anspruch 1, dadurch gekennzeichnet, daß die Endbereiche der Strebe (13) jeweils ein erstes, sich in Strebenlängsrichtung erstreckendes Langloch (16) und zwei hierzu senkrecht ausgerichtete weitere Langlöcher (17, 18) aufweist, von denen das eine (18) oberhalb und das andere (17) unterhalb des ersten Langlochs (16) angeordnet ist, wobei das erste Langloch (16) von einem die Lenkerarme (8, 9 und 10, 11) und die Strebe (13) kniegelenkartig miteinander verbindenden Gelenkzapfen (15) durchsetzt ist und in die beiden anderen Langlöcher (17, 18) Stifte (19, 20) eingreifen, von denen der eine (20) am unteren (8 bzw. 10) und der andere am oberen Lenkerarm (9 bzw. 11) sitzt.

3. Fensterrollo nach Anspruch 1 oder 2, dadurch gekennzeichnet, daß im Bereich von sich gegeneinander bewegenden Teilen des Führungsmechanismusses, wie z.B. der Kniegelenke (12), eine, ggf. einstellbar oder nachstellbar ausgebildete Bremseinrichtung (Scheibe 21) angeordnet ist.

4. Fensterrollo nach wenigstens einem der Ansprüche 1 bis 3, gekennzeichnet durch eine vom Dachverkleidungssystem eines Fahrzeuges im wesentlichen verdeckte Anordnung desselben oberhalb einer Seitenscheibe im Fahrzeug.

5. Fensterrollo nach wenigstens einem der Ansprüche 1 bis 4, dadurch gekennzeichnet, daß die Zugleiste (3) mit einer grifffreundlichen Profilierung ausgebildet ist.

## Claims

1. A window roller blind, especially for motor vehicles, with a winding shaft (1) having a spring arrangement prestressed in a rolling direction, on which winding shaft (1) the roller blind sheet (2) is secured at one edge, the other edge of which is secured to a pull strip (3), in which between the winding shaft (1) and the pull strip (3) a guide mechanism is arranged for bringing the roller blind sheet (2) in and out, which comprises two guide arm couplings (6, 7) in the form of toggle linkages, in which the free guide arms of the guide arm couplings (6, 7) are secured on the one hand to fixed parts (14) of the vehicle or to bearing blocks (4) holding the winding shaft (1) and on the other hand on the pull strip (3), so as to be swivellable, characterised in that a strut (13) connects the toggle linkages (12) of the guide arm couplings (6,7) with each other, extending parallel to the winding shaft (1) and pull strip (3), and also guide means are provided in the region of the toggle linkages (12), in order to ensure a parallel displacement of the pull strip (3) vertically to the winding shaft (1) upon winding and unwinding of the roller blind sheet (2).

2. A window roller blind according to Claim 1, characterised in that the end regions of the strut (13) have in each case a first elongated hole (16) extending in longitudinal direction of the strut, and two further elongated holes (17, 18) aligned vertically hereto, one (18) of which is arranged above and the other (17) below the first elongated hole (16), in which a link pin (15) extends through the first elongated hole (16) which link pin (15) connects the guide arms (8,9 and 10,11) and the strut (13) with each other in the manner of a toggle linkage and pins (19, 20) extend through the other two elongated holes (17, 18), one pin (20) of which sits on the lower guide arm (8 or 10) and the other on the upper guide arm (9 or 11).

3. A window roller blind according to Claim 1 or 2, characterised in that in the region of parts of the guide mechanism which move with respect to each other, such as the toggle linkages (12), a brake arrangement (disc 21) is arranged, which is constructed so as to be adjustable or re-adjustable.

4. A window roller blind according to at least one of Claims 1 to 3, characterised by an arrangement thereof which is substantially concealed by the roof lining system of a vehicle, above a side window pane in the vehicle.

5. A window roller blind according to at least one of Claims 1 to 4, characterised in that the pull strip (3) is constructed with a member which is readily able to be grasped.

## Revendications

1. Store à rouleau pour fenêtre, notamment pour véhicules automobiles, comprenant un arbre d'enroulement (1) comportant un dispositif à ressort précontraint dans la direction de l'enroulement, auquel est fixé un store (2) dont l'autre bord est fixé à une baguette de traction (3), un mécanisme de guidage pour la sortie et la rentrée du store (2) étant disposé entre l'arbre d' enroulement (1) et la baguette de traction (3), mécanisme qui est constitué par deux paires de bras oscillants (6, 7) du type à genouillère, les bras oscillants libres des paires de bras oscillants (6, 7) étant fixés de façon pivotante d'une part à des parties fixes (14) du véhicule ou aux supports recevant l'arbre d'enroulement (1) et d'autre part à la baguette de traction (3), caractérisé en ce que sont prévus une traverse (13) reliant l'une à l'autre les genouillères (12) de la paire de bras oscillants (6, 7), s'étendant parallèlement à l'arbre d'enroulement et à la baguette de traction (3), ainsi que des moyens de guidage dans la région des genouillères (12) pour assurer un déplacement parallèle de la baguette de traction (3) perpendiculairement à l'arbre d'enroulement (1) lors de la sortie et de la rentrée du store (2).

2. Store à rouleau pour fenêtre selon la revendication 1, caractérisé en ce que les régions d'extrémité de la traverse (13) présentent chacune un premier trou oblong (16) s'étendant en direction longitudinale de la traverse et deux autres trous oblongs (17, 18) disposés perpendiculairement au premier, dont l'un (18) est disposé au-dessus et l'autre (17) au-dessous du premier trou oblong (16), le premier trou oblong (16) étant traversé par un tourillon d'articulation (15) qui relie à la manière d'une genouillère les bras oscillants (8, 9 et 10, 11) et la traverse (13), et des tiges (19, 20) pénétrant dans les deux autres trous oblongs (17, 18), dont l'une (20) est montée sur le bras oscillant inférieur (8 ou 10) et l'autre sur le bras oscillant supérieur (9 ou 11).

3. Store à rouleau pour fenêtre selon la revendication 1 ou 2, caractérisé en ce qu'un dispositif de freinage (disque 21), constitué de façon à être éventuellement réglable ou réajustable, est monté dans la région des parties du mécanisme de guidage qui se déplacent les unes par rapport aux autres, telles que par exemple les genouillères (12).

4. Store à rouleau pour fenêtre sel on l'une au moins des revendications 1 à 3, caractérisé par un agencement de ce dernier sensiblement recouvert par le système d'habillage de plafond d'un véhicule, au-dessus d'une vitre latérale de ce véhicule.

5. Store à rouleau pour fenêtre sel on l'une au moins des revendications 1 à 4, caractérisé en ce que la baguette de traction (3) comprend un profilage en facilitant la prise.
